# EUROPÄISCHE PATENTANMELDUNG

(11) **EP 4 717 080 A1**
(43) Veröffentlichungstag der Anmeldung: **01.04.2026**
(21) Anmeldenummer: 24203039.3
(22) Anmeldetag: 26.09.2024
(51) Int. Cl.: A01K 1/015

(54) **VERFAHREN ZUR HERSTELLUNG VON EINSTREU, VERFAHREN ZUM AUSSTATTEN EINES TIERSTALLS UND EINSTREU FÜR DIE TIERHALTUNG**

(71) Anmelder: Energiepark Hahnennest GmbH & Co.KG, 88356 Ostrach (DE)
(72) Erfinder: Metzler, Thomas, 88356 Ostrach (DE)
(74) Vertreter: Patentanwälte und Rechtsanwalt Weiß, Arat & Partner mbB

(57) **Zusammenfassung**

Ein Verfahren zur Herstellung von Einstreu für die Tierhaltung soll gekennzeichnet sein durch folgende Schritte:
- Bereitstellen von Mahlgut, welches zumindest teilweise aus Silphium perfoliatum gewonnen wurde,
- Herstellen der Einstreu derart, dass zumindest 30 Gewichtsprozent der Einstreu aus vermahlenem Pflanzenmaterial von Silphium perfoliatum besteht.

## Beschreibung

### Technisches Gebiet

Die Erfindung betrifft ein Verfahren zur Herstellung von Einstreu, ein Verfahren zum Ausstatten eines Tierstalls und eine Einstreu für die Tierhaltung gemäss den unabhängigen Ansprüchen.

### Stand der Technik

Einstreu ist aus dem Stand der Technik bekannt, um den Boden von Ställen, Käfigen oder Boxen zu bedecken. Hierfür werden beispielsweise Stroh, überständiges Heu, Sägespäne, oder dergleichen, manchmal gemischt mit Sand oder dergleichen, verwendet.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Ein erfindungsgemässes **Verfahren zur Herstellung von Einstreu** für die Tierhaltung umfasst folgende Schritte:
- Bereitstellen von Mahlgut, welches zumindest teilweise aus Silphium perfoliatum gewonnen wurde,
- Herstellen der Einstreu derart, dass zumindest 30 Gewichtsprozent der Einstreu aus vermahlenem Pflanzenmaterial von Silphium perfoliatum besteht.

Das zumindest teilweise, nach einem nachfolgend genannten Ausführungsbeispiel optional vollständig aus Silphium perfoliatum gewonnene Mahlgut kann beispielsweise Partikelgrössen zwischen 0,5 mm und 20 mm aufweisen. Beispielsweise kann an Partikelgrössen zwischen 0,5 mm und 15 mm, weiter bevorzugt zwischen 0,5 mm und 12 mm, weiter bevorzugt zwischen 1 mm und 12 mm gedacht sein. Um eine Partikelgrösse in einem der vorgenannten Bereiche zu erhalten kann ein Klassieren, beispielsweise ein Sieben erfolgen. Eine Maschenweite, d.h. eine Grösse der Öffnungen des verwendeten Siebs, kann in einem bevorzugten Ausführungsbeispiel zwischen 3 mm und 12 mm liegen, zahlreiche Alternativen sind denkbar. Ein entsprechendes Klassieren mit Hilfe zumindest eines Siebs kann in einem gesonderten Verfahrensschritt erfolgen. Ferner kann auch daran gedacht sein, eine nachstehend noch beschriebene Hammermühle zu verwenden, die mit einem entsprechenden Sieb ausgestattet ist.

Gemäss einem einfachen Ausführungsbeispiel kann das Mahlgut zu 100 Prozent aus Silphium perfoliatum gewonnen werden.

Es kann auch daran gedacht sein, dass das Mahlgut durch Mahlen verschiedener Pflanzengattungen oder Pflanzenarten gewonnen wird. Diese können separat voneinander oder gemeinsam gemahlen werden, um das Mahlgut herzustellen. Werden verschiedene Pflanzen separat voneinander gemahlen, so können die Mahlgüter gemischt werden, um das Mahlgut zur Herstellung der Einstreu bereitzustellen.

Weiterhin kann auch daran gedacht sein, neben Mahlgut aus Silphium perfoliatum Pflanzenmaterial einer weiteren Pflanzengattung oder Pflanzenart zur Herstellung der Einstreu zu verwenden, welches nicht gemahlen wurde oder wird. Hierbei kann einerseits Pflanzenmaterial verwendet werden, welches auf andere Weise zerkleinert wurde, wobei die durch Zerkleinern erzeugten Partikel deutlich grösser sind als diejenigen, die beim Mahlen erhalten werden. Weiterhin kann auch daran gedacht sein, Pflanzenmaterial zu verwenden, welches weder zerkleinert noch gemahlen wurde.

Unabhängig davon, welche anderen Bestandteile, d.h. Pflanzenmaterial und gegebenenfalls nicht-pflanzliche Bestandteile die Einstreu umfasst, so besteht sie zumindest zu 30 Gewichtsprozent aus vermahlenem Pflanzenmaterial von Silphium perfoliatum. Es kann daran gedacht sein, dass zumindest 40 oder 50 Gewichtsprozent der Einstreu daraus besteht. Weiter bevorzugt kann daran gedacht sein, dass zumindest 70 Gewichtsprozent, noch bevorzugter zumindest 80 Gewichtsprozent der Einstreu daraus besteht.

Wenn von "Silphium perfoliatum" die Rede ist, so ist die "Durchwachsene Silphie", eine Pflanzenart aus der Familie der Korbblütler, gemeint.

Im Rahmen der vorliegenden Erfindung werden vorzugsweise die abgeernteten oberirdischen Bestandteile von Silphium perfoliatum verwendet. Diese können beispielsweise mit einem Feldhäcksler geerntet werden.

Das Pflanzenmaterial, welches im Rahmen der vorliegenden Erfindung verwendet wird und, ebenfalls im Rahmen der vorliegenden Erfindung, zuvor geerntet werden kann, muss nicht sortenrein geerntet werden. Beispielsweise kann Silphium perfoliatum gemeinsam mit zumindest einer weiteren Nutzpflanzen-Gattung oder Nutzpflanzen-Art angebaut und gemeinsam mit dieser weiteren Nutzpflanze geerntet werden. Bei einem solchen gemeinsamen Anbau kann Silphium perfoliatum beispielsweise eine Untersaat oder eine Hauptfrucht darstellen. Das im Rahmen der vorliegenden Erfindung verwendete Pflanzenmaterial kann somit zwei oder mehr Pflanzenarten oder Pflanzengattungen umfassen, sofern zumindest 30 Gewichtsprozent aus Silphium perfoliatum besteht.

Die so hergestellte Einstreu kann beispielsweise für Milchvieh verwendet werden. Weiterhin kann die Einstreu für Pferde und andere Tiere, insbesondere für landwirtschaftliche Nutztiere verwendet werden. Die Verwendung für andere Nutz- und Haustiere ist denkbar.

Die erfindungsgemäss hergestellte Einstreu bringt **zahlreiche Vorteile** mit sich.

**Sie federt sehr gut.** Eine relativ dünne Schicht von beispielsweise 15 oder 20 Zentimetern genügt somit, um Tieren wie beispielsweise Rindern eine geeignete Unterlage in einem Stall oder einer Box zu bieten. Wenn die Tiere über die Einstreu laufen, wird diese zwar verfestigt und komprimiert, behält aber ihre federnden Eigenschaften. Im Vergleich zu Stroh, welches im Stand der Technik häufig als Einstreu verwendet wird, sind die Feder-Eigenschaften der erfindungsgemäss hergestellten Einstreu deutlich besser. Ebenfalls im Gegensatz zu Stroh wird die erfindungsgemässe Einstreu durch darüber laufende Tiere derart kompaktiert, dass das Pflanzenmaterial der Gewichtskraft eines Tier-Beins bzw. eines Hufs nicht seitlich ausweicht, weil die aus Silphium perfoliatum gewonnenen Bestandteile des Mahlguts vorteilhafte Kohäsions-Eigenschaften aufweisen. Die im Mahlgut enthaltenen Partikel, die aus Silphium perfoliatum gewonnen wurden, weisen untereinander und teilweise auch gegenüber anderen (optional vorhandenen) Bestandteilen der Einstreu also einen starken Zusammenhalt auf, so dass die Einstreu bei Druckbelastung von oben durch bspw. den Huf eines Tieres nicht seitlich ausweicht, sondern vorrangig komprimiert wird. Der Erfinder hat herausgefunden, dass dies bei Stroh, insbesondere auch bei gemahlenem Stroh, nicht der Fall ist.

Insgesamt sorgt Silphium perfoliatum für die positiven federnden Eigenschaften, sofern ihr Anteil an der Einstreu bei über 30 Gewichtsprozent, vorzugsweise bei über 50 Gewichtsprozent und noch bevorzugter bei über 70 Gewichtsprozent liegt.

Ein **weiterer Vorteil** liegt darin, dass die Viskosität des Mists, d.h. eines Gemischs der vorbeschriebenen Einstreu mit tierischen Ausscheidungen es erlaubt, diesen Mist mit einem Gülleverteiler, beispielsweise einem Schleppschlauchfass bzw. Schleppschlauchverteiler problemlos auf ein Feld auszubringen. Die erfindungsgemässe Einstreu weist eine entsprechend geeignete Viskosität auf.

Die Einstreu kann neben gemahlenem Pflanzenmaterial aus Silphium perfoliatum anderes Pflanzenmaterial enthalten, beispielsweise Stroh, insbesondere Getreidestroh, überständiges Heu, Holzspäne, Hartgräser oder Pflanzengranulat. Die vorgenannten Pflanzenmaterialien können optional in gemahlener Form verwendet werden.

Die Einstreu kann weiterhin nicht-pflanzliches Material umfassen. Hierbei kann beispielsweise an Kalk, mineralische Granulate wie etwa Silikate, Zeolithe oder dergleichen gedacht sein. Kalk in der Einstreu kann unter anderem Flüssigkeit und unangenehme Gerüche binden und einer Verkeimung der Einstreu vorbeugen.

Soll die Einstreu Kalk enthalten, so kann dessen Anteil bei 1 bis 10 Gewichtsprozent, vorzugsweise bei 1 bis 5 Gewichtsprozent, besonders bevorzugt bei etwa 2 Gewichtsprozent liegen.

Soll die Einstreu Stroh enthalten, so kann dessen Anteil bei etwa 5 bis 30 Gewichtsprozent, vorzugsweise bei etwa 10 bis 20 Gewichtsprozent, besonders bevorzugt bei etwa 15 Gewichtsprozent liegen.

Das Mahlgut kann durch Mahlen von Pflanzenmaterial hergestellt werden, wobei zumindest 30 Gewichtsprozent des Pflanzenmaterials aus Silphium perfoliatum besteht. Wie bereits beschrieben, besteht die Einstreu zu mindestens 30 Gewichtsprozent aus vermahlenem Pflanzenmaterial von Silphium perfoliatum.

Wird die Einstreu ausschliesslich aus Pflanzenmaterial hergestellt, und werden hierbei verschiedene Pflanzengattungen oder Pflanzenarten verwendet, so muss zumindest 30 Gewichtsprozent des gesamten Pflanzenmaterials gemahlene Silphium perfoliatum sein. Die übrigen maximal 70 Gewichtsprozent können gemahlenes und nicht gemahlenes Pflanzenmaterial umfassen. Beispielsweise kann auch daran gedacht sein, zumindest 30 Gewichtsprozent vermahlenes Pflanzenmaterial aus Silphium perfoliatum und daneben nicht vermahlenes Pflanzenmaterial aus Silphium perfoliatum und/oder vermahlenes oder nicht vermahlenes Pflanzenmaterial von anderen Pflanzengattungen oder Pflanzenarten einzusetzen.

Wie bereits beschrieben muss Silphium perfoliatum einen Anteil von zumindest 30 Gewichtsprozent am Pflanzenmaterial haben. Werden bei der Herstellung der Einstreu auch nicht-pflanzliche Stoffe wie beispielsweise Kalk verwendet, so muss der Anteil von Silphium perfoliatum am Pflanzenmaterial entsprechend höher liegen, so dass insgesamt zumindest 30 Gewichtsprozent der Einstreu aus vermahlenem Pflanzenmaterial von Silphium perfoliatum besteht.

Das Mahlen kann in zumindest zwei Stufen erfolgen.

Ein erstes Mahlen kann in einer Prallmühle, insbesondere in einer Hammermühle erfolgen. Ein zweites Mahlen, welches vorzugsweise zeitlich nach dem ersten Mahlen durchgeführt wird, kann in einem Refiner, insbesondere in einem Scheiben-Refiner erfolgen.

Prallmühlen sind aus dem Stand der Technik bekannt. Es handelt sich üblicherweise um Mühlen, in deren Mahlraum der zu mahlende Stoff so lange verbleibt, bis die erwünschte Feinheit erreicht ist. Nach Erreichen der erwünschten Feinheit erfolgt in der Regel ein Klassieren, beispielsweise über ein Sieb.

Hammermühlen werden im Stand der Technik meist mit möglichst trockenen Stoffen beschickt, da mit steigendem Wassergehalt des zu mahlenden Stoffes der spezifische Energieverbrauch der Hammermühle steigt und die Leistung der Hammermühle sinkt.

Refiner sind aus dem Stand der Technik bekannte Mahlmaschinen, und dienen üblicherweise unter anderem dem Zerfasern der zu mahlenden Stoffe. Scheiben-Refiner verfügen über zwei Scheiben, die für eine Zerfaserung des zu mahlenden Guts sorgen.

Es kann daran gedacht sein, dass das Pflanzenmaterial während dem Mahlen einen Trockensubstanzgehalt von maximal 12 Prozent aufweist. Es wurde festgestellt, dass das Mahlen des Pflanzenmaterials in einer Hammermühle bei hohen Trockensubstanzgehalten von über 80 Prozent sowie, überraschend, bei sehr niedrigen Trockensubstanzgehalten von maximal 12 Prozent sehr effizient und mit zufriedenstellendem Ergebnis verlief. Im dazwischenliegenden Bereich von etwa 15 Prozent bis etwa 80 Prozent Trockensubstanzgehalt konnte das Pflanzenmaterial jedoch nicht in der gewünschten Weise bzw. mit dem gewünschten Ergebnis gemahlen werden. Die vorstehenden Überlegungen gelten vorzugsweise für Pflanzenmaterial, welches vollständig aus Silphium perfoliatum besteht.

Unmittelbar nach der Ernte weist Pflanzenmaterial, welches nur aus Silphium perfoliatum besteht, üblicherweise einen Trockensubstanzgehalt von etwa 25 Prozent auf.

Nach einer Silage, d.h. aus einem Silo kommend, weist Pflanzenmaterial, welches nur aus Silphium perfoliatum besteht, üblicherweise einen Trockensubstanzgehalt von etwa 25 bis 38 Prozent auf.

Um solches Pflanzenmaterial in der Hammermühle zu bearbeiten, muss der Trockensubstanzgehalt eingestellt werden, so dass er unter etwa 12 Prozent oder über etwa 80 Prozent liegt. Da eine Erhöhung des Trockensubstanzgehalts durch Trocknung energieintensiv ist und das Mahlen von sehr trockenem Material in der Hammermühle zu starker Staubentwicklung führen kann, wird im Rahmen der vorliegenden Erfindung der Trockensubstanzgehalt des Pflanzenmaterials vorzugsweise auf einen Wert von maximal 12 Prozent gesenkt. Erfolgte nach einer optionalen Silage oder einer optionalen Fermentation und/oder zumindest einem optionalen Waschen, was nachstehend noch erläutert wird, ein Abpressen und wurde ein dabei entstehendes Filtrat aufgefangen, so kann dieses für die Absenkung des Trockensubstanzanteils vor dem Mahlen zugegeben werden. Dieses Filtrat kann zuvor gereinigt und/oder aufbereitet und/oder mit Wasser verdünnt werden. So kann einerseits ressourcenschonend gearbeitet und andererseits das Überführen unerwünschter Stoffe aus dem Filtrat in die Mühle und somit letztlich in die Einstreu vermieden werden.

In der Hammermühle liegt der Trockensubstanzgehalt des Pflanzenmaterials vorzugsweise bei unter 12 Prozent, besonders bevorzugt zwischen 1 und 12 Prozent. Bei Trockensubstanzgehalten von weniger als 1 Prozent ist die Effizienz des Mahl-Prozesses häufig sehr gering. Es kann an Trockensubstanzgehalte in der Hammermühle von 1 bis 10 Prozent, besonders bevorzugt von 3 bis 7 Prozent gedacht sein.

Im Scheiben-Refiner kann derselbe Trockensubstanzgehalt vorliegen, wie zuvor in der Hammermühle. Die vorgenannten Bereiche gelten somit auch für das Mahlen im Scheiben-Refiner. Im Gegensatz zu Hammermühlen sind Scheiben-Refiner im Stand der Technik bereits als dezidiert für ein Nassvermahlen geeignete Maschinen bekannt.

Das aus der Hammermühle entnommene Mahlgut kann unmittelbar in den Scheiben-Refiner überführt werden. Optional kann das Mahlgut zwischen beiden Mahlschritten auch abgepresst, gewaschen, oder anderweitig behandelt werden. Gegebenenfalls kann der Trockensubstanzgehalt zwischen dem ersten und dem zweiten Mahlschritt erneut eingestellt werden.

Das Pflanzenmaterial kann also im Allgemeinen auf den vorgenannten Trockensubstanzgehalt eingestellt werden.

Dies erfolgt bevorzugt vor dem Mahlen, unter Umständen auch während des Mahlvorgangs.

Dem Pflanzenmaterial kann vor oder während dem Mahlen Flüssigkeit zugegeben werden. Vorzugsweise wird vor dem Mahlen Flüssigkeit zugegeben. Bei der Flüssigkeit handelt es sich vorzugsweise um Wasser oder um eine wässrige Lösung, die beispielsweise Wasser und zumindest einen für das Mahlen oder im Allgemeinen das Verarbeiten des Pflanzenmaterials geeigneten Zusatzstoff umfasst.

Alternativ kann daran gedacht sein, den Trockensubstanzgehalt des Pflanzenmaterials nach einer nachstehend beschriebenen optional durchzuführenden Silage oder nach einer ebenfalls nachstehend beschriebenen optional durchzuführenden Fermentierung nicht oder nur geringfügig zu senken, um einen vorteilhaft hohen Flüssigkeitsgehalt bzw. einen vorteilhaft niedrigen Trockensubstanzgehalt zu erzielen. In den meisten Fällen wird das Pflanzenmaterial nach der optionalen Silage und/oder nach der optionalen Fermentation abgepresst und ggf. gewaschen, um Stoffe, welche aus dem Silo oder dem Fermenter stammen, und in der Einstreu unerwünscht sind, zu entfernen. Ein Waschen kann hierbei durch Hinzufügen von Wasser und anschliessendes Abpressen erfolgen, was mehrfach wiederholt werden kann.

Das Pflanzenmaterial kann vor dem Mahlen siliert werden.

Ein solches Silieren erfolgt üblicherweise nach der Ernte, die beispielsweise mit einem Feldhäcksler erfolgen kann, und dient der Haltbarmachung des Pflanzenmaterials. Ein Silieren bzw. die Durchführung einer Silage sind aus dem Stand der Technik bekannt. Auch Silos zur Durchführung der Silage sind bekannt und können im Rahmen der vorliegenden Erfindung zum Einsatz kommen.

Das Pflanzenmaterial kann gemäss der vorliegenden Erfindung direkt nach der Ernte verarbeitet werden. Beispielsweise kann Silphium perfoliatum mittels Feldhäcksler oder dergleichen geerntet und unmittelbar danach gemahlen werden. Da die Ernte jedoch nur ein oder höchsten wenige Male jährlich frisches Pflanzenmaterial liefert, Einstreu aber ganzjährig benötigt wird, ist eine Silage zwecks Haltbarmachung und Vorratshaltung sinnvoll, um die Einstreu ganzjährig herstellen zu können. Die Herstellung der erfindungsgemässen Einstreu aus frischem Pflanzenmaterial ist jedoch ebenfalls möglich.

Das Pflanzenmaterial kann nach dem Mahlen auf einen Trockensubstanzgehalt von 35 bis 85 Prozent eingestellt werden. Vorzugsweise wird der Trockensubstanzgehalt des Pflanzenmaterials nach dem zweiten Mahlen derart eingestellt. Der Trockensubstanzgehalt kann bei 40 bis 70 Prozent liegen, bevorzugt bei 45 bis 60 Prozent, besonders bevorzugt bei ungefähr oder genau 50 Prozent. Mit einem solchen Trockensubstanzgehalt von 35 bis 85 Prozent ist die Einstreu auslieferungsfähig und kann im Stall eingesetzt werden.

Das Pflanzenmaterial kann vor dem Mahlen zwecks Gasausbeute fermentiert werden.

Alternativ zum Fermentieren kann an ein Kompostieren gedacht sein. Sowohl frisch geerntetes Pflanzenmaterial als auch siliertes Pflanzenmaterial kann über einen gewissen Zeitraum hinweg kompostiert werden. Vorzugsweise wird der Kompostiervorgang nach etwa 1 bis 2 Wochen abgebrochen, und aus diesem Pflanzenmaterial die Einstreu herzustellen. Das kurzzeitige Kompostieren bewirkt, dass die Fasern von Silphium perfoliatum weicher werden, was für die Herstellung der Einstreu und deren Eigenschaften vorteilhaft sein kann.

Das Fermentieren von Pflanzenmaterial im Fermenter einer Biogasanlage ist aus dem Stand der Technik bekannt und kann im Rahmen der vorliegenden Erfindung angedacht sein. Es kann beispielsweise angedacht sein, das Pflanzenmaterial 40 bis 150 Tage im Fermenter zu belassen.

Das optionale Silieren bzw. die optionale Silage kann vor dem Fermentieren erfolgen.

Die Gasausbeute zu nutzen beeinträchtigt die Qualität und Verwendbarkeit von Pflanzenmaterial aus Silphium perfoliatum im Hinblick auf die Verwendung als Bestandteil der erfindungsgemässen Einstreu nicht.

Es kann daran gedacht sein, nach dem Fermentieren etwaige aus dem Fermenter entnommene Flüssigkeit vom Pflanzenmaterial abzutrennen. Weiterhin kann auch daran gedacht sein, das Pflanzenmaterial nach dem Fermentieren ein- oder mehrmals mit beispielsweise Wasser zu waschen. Beide Schritte können durchgeführt werden, um aus dem Fermenter stammende wasserlösliche Stoffe zu entfernen, die in der Einstreu unerwünscht sind.

Beispielsweise aus der DE 10 2021 100 606 A1 ist es bekannt, aus Silphium perfoliatum Papier herzustellen. Um dem Papier eine hohe Reissfestigkeit zu verleihen, kann ein Aufschluss, insbesondere Dampfdruck-Aufschluss (steam explosion) durchgeführt werden.

Gemäss einer Ausführungsvariante der vorliegenden Erfindung kann daran gedacht sein, das aus Silphium perfoliatum bestehende oder Silphium perfoliatum umfassende Pflanzenmaterial in einem integrierten Prozess bedarfsabhängig zu Einstreu oder Papier verarbeitet wird. Ob das Pflanzenmaterial zu Einstreu oder Papier verarbeitet wird, kann davon abhängen, ob oder wie lange das Pflanzenmaterial, ggf. nach einer optionalen Silage zur Haltbarmachung bzw. Aufbewahrung, zwecks Gasausbeute in einem Fermenter behandelt wird. Ob das Pflanzenmaterial im Fermenter, insbesondere im Fermenter einer Biogasanlage, zwecks Gasausbeute behandelt wird, kann vom Füllgrad des Fermenters abhängen.

Ist beispielsweise der Fermenter ausreichend befüllt, so kann etwaiges frisch geerntetes oder einem Silo nach einer Silage entnommenes Pflanzenmaterial umfassend zumindest 30 Gewichtsprozent Silphium perfoliatum einer Papierherstellung zugeführt werden. Beispielsweise kann ein Dampfdruckaufschluss erfolgen, woraufhin das Pflanzenmaterial zu Zellstoff für die Papierherstellung verarbeitet wird.

Ist der Fermenter jedoch nicht ausreichend befüllt, so kann das Pflanzenmaterial umfassend zumindest 30 Gewichtsprozent Silphium perfoliatum in den Fermenter überführt und dort beispielsweise 40 bis 150 Tage fermentiert werden, um eine vollständige Gasausbeute zu erzielen. Auch nach bis zu 150 Tagen Fermentation eignet sich das vorgenannte Pflanzenmaterial noch zur Herstellung der Einstreu gemäss der vorliegenden Erfindung. Meist ist das Pflanzenmaterial jedoch nicht mehr geeignet zur Herstellung von Zellstoff für die Papierproduktion.

Im Hinblick auf den vorstehend beschriebenen integrierten Prozess sind zahlreiche Varianten denkbar. Beispielsweise kann auch daran gedacht sein, das vorbeschriebene Pflanzenmaterial, ggf. nach einer optionalen Lagerung bzw. Haltbarmachung im Silo bzw. durch Silage, stets im Fermenter zu fermentieren. Wird das Pflanzenmaterial nach einem Zeitraum von weniger als 40 Tagen aus dem Fermenter entnommen, so eignet es sich in der Regel noch für die Zellstoffherstellung, und kann somit der Papierproduktion zugeführt werden. Wird das Pflanzenmaterial nach einem Zeitraum von mehr als 40 Tagen und bis hin zu etwa 150 Tagen aus dem Fermenter entnommen, so eignet es sich in der Regel nicht mehr für die Zellstoffherstellung, während es sehr wohl für die Herstellung der Einstreu gemäss der vorliegenden Erfindung geeignet ist.

Wie eingangs beschrieben, so besteht ein Pflanzenmaterial im Rahmen der vorliegenden Erfindung aus zumindest 30 Prozent Silphium perfoliatum. Vorzugsweise gelten die vorstehenden und nachstehenden Überlegungen für Pflanzenmaterial, welches vollständig oder zumindest im Wesentlichen vollständig aus Silphium perfoliatum besteht. Dies gilt auch für alle anderen Ausführungsbeispiele der vorliegenden Erfindung.

Ist im Rahmen der vorliegenden Erfindung nur von einem nicht näher spezifizierten "Pflanzenmaterial" die Rede, so ist in der Regel ein Pflanzenmaterial umfassend zumindest 30 Gewichtsprozent Silphium perfoliatum gemeint.

Im Gegensatz zu Stroh, beispielsweise Getreidestroh, welches gemäss dem Stand der Technik in grossem Umfang für die Herstellung von Einstreu für die Nutztierhaltung verwendet wird, birgt die Verwendung von Silphium perfoliatum für die Einstreu-Herstellung den Vorteil, dass Silphium perfoliatum Humus aufbaut. Auch bei jährlicher Ernte durch Abfuhr der oberirdischen Bestandteile von Silphium perfoliatum speichert diese durch Humus-Aufbau jährlich im Schnitt 8 Tonnen Kohlendioxid pro Hektar. Bei der Verwendung von Stroh für die Herstellung von Einstreu wird hingegen netto Kohlendioxid freigesetzt, weil Stroh keinen Humus aufbaut.

Die vorliegende Erfindung umfasst auch ein **Verfahren zum Ausstatten eines Tierstalls,** wobei zumindest ein Abschnitt eines Stallbodens mit einer zumindest 15 Zentimeter hohen Schicht der in vorbeschriebener Weise hergestellten Einstreu gefüllt wird.

Die vorliegende Erfindung umfasst auch eine **Einstreu für die Tierhaltung** gekennzeichnet durch zumindest 30 Gewichtsprozent Mahlgut, welches aus Silphium perfoliatum gewonnen wurde.

Einzelheiten und Details, welche eingangs im Hinblick auf das Verfahren zur Herstellung von Einstreu beschrieben wurden, gelten auch für die vorgenannte Einstreu für die Tierhaltung und umgekehrt. Insbesondere kann die vorgenannte Einstreu so hergestellt sein, wie dies im Hinblick auf das Verfahren zur Herstellung von Einstreu beschrieben wurde.

Die Einstreu kann zumindest 40 Gewichtsprozent, weiter bevorzugt zumindest 50 Gewichtsprozent, weiter bevorzugt zumindest 65 Gewichtsprozent, weiter bevorzugt zumindest 75 Gewichtsprozent, noch bevorzugter zumindest 80 Gewichtsprozent Mahlgut umfassen, welches aus Silphium perfoliatum gewonnen wurde.

## Patentansprüche

1. Verfahren zur Herstellung von Einstreu für die Tierhaltung **gekennzeichnet durch** folgende Schritte:
- Bereitstellen von Mahlgut, welches zumindest teilweise aus Silphium perfoliatum gewonnen wurde,
- Herstellen der Einstreu derart, dass zumindest 30 Gewichtsprozent der Einstreu aus vermahlenem Pflanzenmaterial von Silphium perfoliatum besteht.

2. Verfahren nach Anspruch 1, **dadurch gekennzeichnet, dass** das Mahlgut durch Mahlen von Pflanzenmaterial hergestellt wird, wobei zumindest 30 Gewichtsprozent des Pflanzenmaterials aus Silphium perfoliatum besteht.

3. Verfahren nach Anspruch 2, **dadurch gekennzeichnet, dass** das Mahlen in zumindest zwei Stufen erfolgt.

4. Verfahren nach Anspruch 3, **dadurch gekennzeichnet, dass** ein erstes Mahlen in einer Prallmühle, insbesondere in einer Hammermühle, und ein zweites Mahlen in einem Refiner, insbesondere in einem Scheiben-Refiner erfolgt.

5. Verfahren nach Anspruch 4, **dadurch gekennzeichnet, dass** das Pflanzenmaterial während dem Mahlen einen Trockensubstanzgehalt von maximal 12 Prozent aufweist.

6. Verfahren nach Anspruch 5, **dadurch gekennzeichnet, dass** dem Pflanzenmaterial vor oder während dem Mahlen Flüssigkeit zugegeben wird.

7. Verfahren nach zumindest einem der Ansprüche 2 bis 6, **dadurch gekennzeichnet, dass** das Pflanzenmaterial nach dem Mahlen auf einen Trockensubstanzgehalt von 35 bis 85 Prozent eingestellt wird.

8. Verfahren nach einem der Ansprüche 2 bis 7, **dadurch gekennzeichnet, dass** das Pflanzenmaterial vor dem Mahlen siliert wird.

9. Verfahren nach einem der Ansprüche 2 bis 8, **dadurch gekennzeichnet, dass** das Pflanzenmaterial vor dem Mahlen zwecks Gasausbeute fermentiert wird.

10. Verfahren zum Ausstatten eines Tierstalls, wobei zumindest ein Abschnitt eines Stallbodens mit einer zumindest 15 Zentimeter hohen Schicht der nach einem der vorangehenden Ansprüche hergestellten Einstreu gefüllt wird.

11. Einstreu für die Tierhaltung **gekennzeichnet durch** zumindest 30 Gewichtsprozent Mahlgut, welches aus Silphium perfoliatum gewonnen wurde.

12. Einstreu für die Tierhaltung nach Anspruch 11, **gekennzeichnet durch** zumindest 40 Gewichtsprozent, weiter bevorzugt zumindest 50 Gewichtsprozent, weiter bevorzugt zumindest 65 Gewichtsprozent, weiter bevorzugt zumindest 75 Gewichtsprozent, noch bevorzugter zumindest 80 Gewichtsprozent Mahlgut, welches aus Silphium perfoliatum gewonnen wurde.

13. Einstreu nach Anspruch 11 oder 12, hergestellt nach zumindest einem der Ansprüche 1 bis 8.
